# FASCICULE DE BREVET EUROPEEN

(11) **EP 1 249 320 B1**
(45) Date de publication et mention de la délivrance du brevet: **22.03.2006**
(21) Numéro de dépôt: 02290936.0
(22) Date de dépôt: 15.04.2002
(51) Int. Cl.: B26F 3/00, B26F 1/38, B23Q 1/60

(54) **Dispositif de déplacement d'un chariot d'un dispositif de découpe à jet d'eau**
Vorrichtung zum Bewegen eines Schlittens einer Wasserstrahlschneidvorrichtung
Apparatus for moving a carriage of a water jet cutter

(30) Priorité: 13.04.2001 FR 0105078
(43) Date de publication de la demande: 16.10.2002
(73) Titulaire: Bourgogne Hydro, 71530 Champforgeuil (FR)
(72) Inventeur: Chopard, Jean-Pierre, 71100 Chalon sur Saone (FR)
(74) Mandataire: Honoré, Anne-Claire

(56) Documents cités:
- EP-A- 0 955 138
- EP-A- 1 142 678
- WO-A-01/89778
- WO-A-95/05746
- DE-A- 19 810 333
- US-A- 3 470 780
- US-A- 3 978 748
- US-A- 4 711 056
- US-A- 5 199 342

## Description

La présente invention concerne un dispositif de découpe à jet d'eau particulièrement destiné à la découpe de produits alimentaires procurant de bonnes conditions d'hygiène de la découpe et préservant de l'humidité les unités de motorisation de la tête de coupe conformément au préambule des revendications 1 et 3.

Dans le domaine de la découpe de produits alimentaires, on connaît bien des dispositifs de découpe dits à jet d'eau constitués d'un bâti sur lequel sont montés un plateau de chargement s'étendant globalement horizontalement et coulissant le long de glissières, ledit plateau recevant les produits alimentaires à découper, et un chariot se déplaçant longitudinalement et transversalement sur le bâti au-dessus dudit plateau ; ce chariot est actionné par des moteurs électriques ou analogues positionnés grossièrement dans le plan de déplacement du chariot juste au-dessus des produits alimentaires à découper et il porte une tête de coupe constituée par une buse. Lors de la découpe, des projections de fines particules d'eau et de produits alimentaires sont projetées dans l'air et viennent se loger dans les glissières du plateau de chargement, sur les rails du chariot et sur les moteurs électriques ; ce qui nuit considérablement à l'hygiène des découpes. En effet, ces dispositifs de découpe à jet d'eau, bien que nettoyés très fréquemment, sont le siège de foyers de moisissure et de bactéries.

On connaît, par exemple, le brevet allemand DE 198 10 333, considéré représenter l'état de la technique le plus proche, qui décrit un dispositif de découpe à jet d'eau permettant de découper des pièces en trois dimensions. Ledit dispositif est constitué de deux rails parallèles solidaires d'un plan de travail horizontal, lesdits rails s'étendent suivant un axe horizontal X, et sur lesquels coulissent respectivement un chariot muni de moyens d'entraînement. Ces chariots portent des montants dont les extrémités supérieures sont jointes par une traverse formant un rail le long duquel coulisse un second chariot muni de moyens d'entraînement, ladite traverse s'étendant suivant un axe horizontal Y orthogonal à l'axe X. Ce second chariot comporte, par ailleurs, une bague dans laquelle coulisse, par des moyens d'actionnement, une potence verticale à l'extrémité inférieure de laquelle est articulée une buse de découpe, les moyens d'articulation de la buse par rapport à la potence consistant en des moteurs rotatifs. Ce dispositif permet ainsi de découper des objets positionnés sur le plan de travail tels que des produits alimentaires, par exemple, suivant des lignes de coupe en trois dimensions. Néanmoins, lors de la coupe de produits alimentaires, de fines particules de produits alimentaires sont projetées sur les rails solidaires du plan de travail et sur les moyens d'entraînement des chariots coulissant sur lesdits rails ce qui, outre les problèmes d'hygiène liés à la prolifération des bactéries sur lesdits rails qui s'étendent à proximité de l'objet à découper, provoque des détériorations des moyens d'actionnement des chariots et de la buse.

Afin de remédier à ces inconvénients, on a déjà imaginé des dispositifs de découpe à jet d'eau comprenant des moyens pour l'étanchéité des systèmes d'actionnement du chariot supportant la buse de découpe : c'est le cas, par exemple, du brevet international WO95/0574 décrivant un dispositif à jet d'eau particulièrement adapté pour la découpe de produits alimentaires. Le dispositif comprend une buse pour former un jet d'eau coupant et des moyens d'actionnement pour déplacer en translation la buse sur un support. Les moyens d'actionnement comprennent deux tubes parallèles dont les extrémités sont solidaires de deux carters étanches et une paire d'aimants, un premier aimant positionné dans l'un des tubes et un second aimant annulaire entourant ledit tube. Les moyens d'actionnement comprennent, par ailleurs, un moteur positionné à l'intérieur d'un premier carter étanche entraînant en rotation une courroie s'étendant dans les tubes connectés aux carters étanches, le second carter recevant la poulie de renvoi de la courroie. Le premier aimant est solidaire de la courroie de sorte que ledit aimant se déplace longitudinalement à l'intérieur dudit tube qui est obtenu à partir d'un matériau perméable au champ magnétique, le second aimant annulaire sur lequel est positionnée la buse étant positionné sur ledit tube de sorte que le déplacement longitudinal du premier aimant à l'intérieur du tube entraîne le déplacement longitudinal du second aimant annulaire déplaçant ainsi la buse au-dessus d'un tapis roulant sur lequel sont positionnés les produits alimentaires à découper.

Ce type de dispositif présente l'inconvénient d'être difficilement adaptable aux moyens d'actionnant d'un chariot se déplaçant suivant deux axes X et Y. De plus, lors de la découpe, de fines particules de produits alimentaires et de l'eau sont projetées sur le tube sur lequel coulisse le second aimant portant la buse ; ce qui provoque de fréquents blocages de ladite buse le long du tube grèvant notablement le rendement de ces dispositifs.

L'un des buts de l'invention est donc de remédier à ces inconvénients en proposant un dispositif de découpe à jet d'eau de conception simple limitant les émissions sonores, procurant de bonnes conditions d'hygiène de la découpe et préservant de l'humidité les unités de motorisation.

A cet effet et conformément à l'invention il est proposé un dispositif comprenant les caractéristiques de la revendication 1 ainsi qu'un dispositif comprenant les caractéristiques de la revendication 3.

On comprend bien que, les moyens d'actionnement du chariot de coupe étant suffisamment éloignés du chariot de commande, ces derniers sont protégés de toutes projections d'eau ou de fines particules de produits alimentaires évitant ainsi toute détérioration desdits moyens d'actionnement lors de la découpe des produits alimentaires ou du nettoyage du dispositif, ce qui permet un nettoyage fréquent et complet du dispositif offrant une hygiène parfaite pour les découpes alimentaires.

Selon une caractéristique essentielle du dispositif de découpe à jet d'eau suivant l'invention, les moyens de transmission sont constitués d'une part, d'un premier bras supérieur dont les extrémités sont respectivement solidaires du chariot de commande et d'une rotule solidaire du bâti, positionnée entre ledit chariot de commande et le chariot de coupe et, d'autre part, d'un second bras inférieur dont les extrémités sont respectivement solidaires du chariot de coupe et de ladite rotule, les bras supérieur et inférieur étant solidarisés respectivement du chariot de commande et au chariot de coupe par des articulations telles que des joints universels par exemple.

Par ailleurs, la rotule est avantageusement solidaire d'une plaque de tôle s'étendant entre les montants du bâti afin de protéger les moyens d'actionnement du chariot de commande des éventuelles projections d'eau.

La description qui va suivre est un exemple particulier de réalisation, donné à titre d'exemple non limitatif, du dispositif de découpe à jet d'eau conforme à l'invention, et fait référence aux dessins annexés sur lesquels :
- la figure 1 est une vue en perspective du dispositif de découpe à jet d'eau conforme à l'invention,
- la figure 2 est une vue de côté du dispositif de découpe à jet d'eau suivant l'invention,
- la figure 3 est une vue en coupe schématique suivant la ligne III-III' du dispositif selon l'invention représenté sur la figure 2,
- la figure 4 est une vue en perspective d'une variante d'exécution des moyens de transmission du chariot de commande au chariot de coupe conforme à l'invention,
- la figure 5 est une vue en coupe longitudinale des tiges supérieures et inférieures munies de moyens d'extension formant respectivement le bras supérieur et le bras inférieur des moyens de transmission conforme à l'invention,
- la figure 6 est une vue en coupe longitudinale d'une variante d'exécution des tiges supérieures et inférieures des moyens de transmission suivant l'invention.

En référence aux figures, le dispositif de découpe à jet d'eau qui va être décrit à titre d'exemple non limitatif, est particulièrement destiné à la découpe de produits alimentaires tels que des gâteaux par exemple.

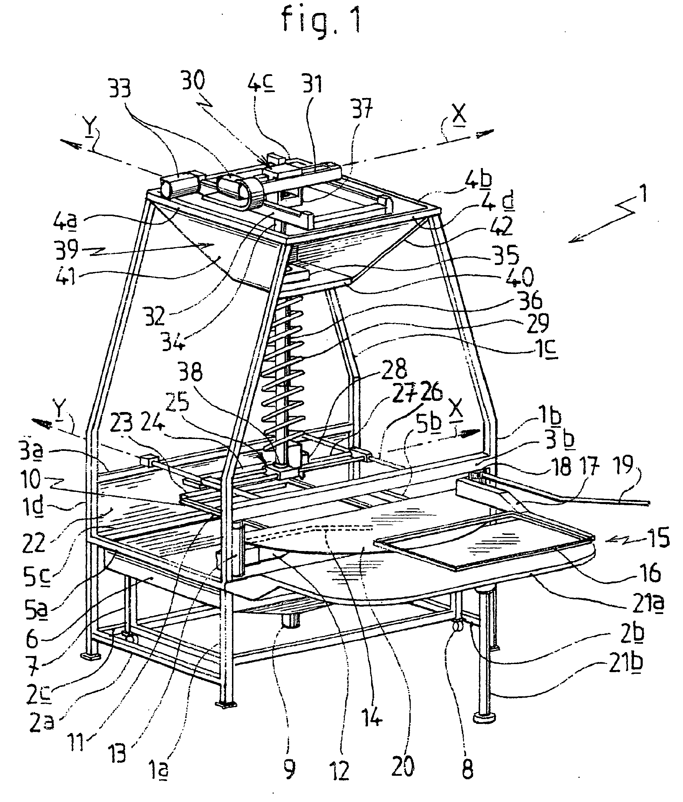

A cet égard, le dispositif conforme à l'invention, représenté en perspective sur la figure 1 est constitué d'un bâti 1 comprenant quatre montants 1a, 1b, 1c et 1d reliés deux à deux dans leur partie inférieure par deux traverses latérales 2a et 2b reliant respectivement les montants 1a et 1d et les montants 1b et 1c, et une traverse arrière 2c reliant les montants 1c et 1d. Dans la partie médiane du bâti 1, une traverse arrière 3a et une traverse avant 3b relient respectivement les montants arrières 1c et 1d et les montants avants 1a et 1b. A l'extrémité supérieure du bâti 1, les montants 1a,1b,1c et 1d sont reliés deux à deux par deux traverses latérales 4a,4b, une traverse arrière 4c et une traverse avant 4d, formant ainsi un bâti 1 globalement parallélépipédique. De plus, le bâti 1 comprend avantageusement deux traverses 5a et 5b latérales et une traverse arrière 5c supplémentaires s'étendant entre les traverses médianes 3a,3b et les traverses inférieures 2a,2b,2c afin de rigidifier le bâti 1. Par ailleurs, la partie supérieure du bâti 1, c'est-à-dire la partie s'étendant au-dessus des traverses médianes 3a,3b forme avantageusement un tronc de pyramide afin de réduire l'encombrement du dispositif.

En référence aux figures 1 à 3, le dispositif comprend un bac de récupération du fluide de coupe 6 monté sur un piétement 7 muni de roulettes 8 de telle sorte que ledit bac de récupération 6 puisse être retiré de l'intérieur du bâti 1 en passant entre les montants avants 1a et 1b constituant la face avant du bâti 1 pour permettre son nettoyage par exemple. Le bac de récupération 6 est muni à son extrémité inférieure d'une évacuation 9 qui est classiquement connectée à un système d'aspiration non représenté sur les figures. De plus, la génératrice supérieure du bac de récupération du fluide de coupe 6 s'étend globalement dans le plan formé par les traverses latérales 5a,5b et arrière 5c supplémentaires du bâti 1.

Entre les traverses supplémentaires 5a,5b et 5c et les traverses médianes 3a,3b, représentées sur la figure 1, le dispositif comprend un premier plateau de chargement 10 dit plateau de chargement inférieur constitué d'un cadre 11 globalement rectangulaire muni d'ajourements adéquats ou suffisants pour permettre l'écoulement du fluide de coupe, d'un bras 12 solidaire du cadre 11 et pivotant autour d'un axe 13 s'étendant verticalement le long du montant 1a et d'un levier 14 solidarisé au bras 12 à proximité de l'axe 13 afin de faire pivoter le plateau inférieur 10 autour de l'axe vertical 13 depuis une première position de chargement où ledit plateau inférieur 10 s'étend à côté du bâti 1 jusqu'à une seconde position de coupe où ledit plateau inférieur 10 s'étend entre les montants du bâti 1 tel que représenté sur la figure 1. Au-dessus du plateau inférieur 10, le dispositif comprend un second plateau de chargement dit plateau supérieur 15 constitué, de la même manière que précédemment, d'un cadre 16 muni d'ajourements adéquats, d'un bras 17 solidaire dudit cadre 15 et pivotant autour d'un axe 18 s'étendant verticalement parallèlement au montant 1b du bâti 1 et d'un levier 19 solidarisé au bras 17 à proximité de l'axe de rotation 18 de telle sorte que ledit plateau supérieur 15 puisse être amené depuis une première position de chargement où ledit plateau supérieur 15 s'étend à côté du bâti 1, tel que représenté sur la figure 1, jusqu'à une seconde position de coupe où ledit plateau supérieur 15 s'étend entre les montants du bâti 1.

Selon une variante non représentée sur les figures, des pignons reliés entre eux par une chaîne sont montés sur les axes 13 et 18 des plateaux 10 et 15, lesdits pignons étant solidaires des bras 12 et 17 desdits plateaux 10 et 15, de sorte que la rotation du plateau supérieur 15, par exemple, depuis sa position de chargement jusqu'à sa position de coupe entraîne la rotation du plateau inférieur 10 depuis sa position de coupe jusqu'à sa position de chargement et inversement. De plus, la chaîne et les pignons sont avantageusement contenus dans un carter solidaire de la traverse médiane avant 3b afin de les préserver des projections d'eau et d'éviter de souiller les produits alimentaires à découper avec la graisse de la chaîne.

Par ailleurs, il est bien évident que les plateaux 10 et 15 pourraient s'étendre dans un même plan et être amenés respectivement depuis leur position de chargement jusqu'à leur position de coupe, et inversement, par des mouvements alternatifs indépendants.

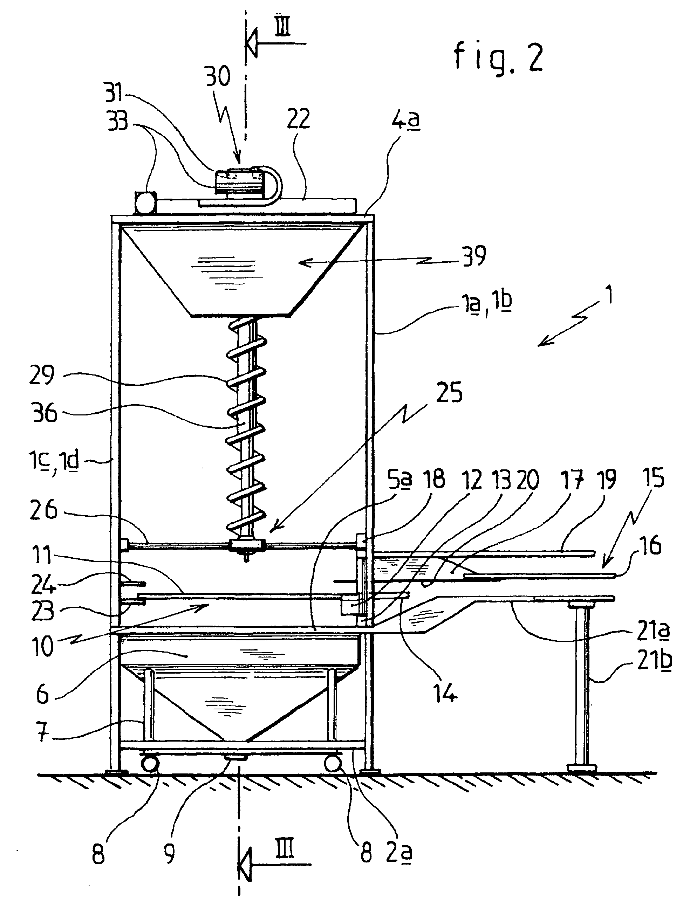

Accessoirement, le bâti 1 comprend, en référence aux figures 1 et 2, une plaque 20 obtenue de préférence dans un matériau inoxydable s'étendant horizontalement depuis la face d'introduction des plateaux inférieur 10 et supérieur 15, c'est-à-dire depuis la face avant du bâti 1 délimité par les montants 1a et 2b, vers l'extérieur entre lesdits plateaux inférieur 10 et supérieur 15 pour que, lors de la découpe des produits alimentaires positionnés sur le plateau supérieur 15, les produits alimentaires positionnés sur le plateau inférieur 10 en position de chargement soient protégés des projections d'eau. De plus, le dispositif comprend un plateau 21a de récupération des poussières et de l'eau s'étendant horizontalement depuis la face avant du bâti 1 vers l'extérieur sous le plateau de chargement inférieur 10, ledit plateau de récupération 21a s'étendant au-delà de la plaque 20. Ledit plateau 21a est soutenu par un pied 21b de préférence escamotable afin de permettre le retrait du bac de récupération 6 de l'eau de coupe lors de son nettoyage.

En référence aux figures 1 à 3, un panneau 22 est positionné entre les montants arrières 1d,1c et les traverses arrières supplémentaires 5c et médianes 3a, c'est-à-dire entre les traverses 5c et 3a de la face arrière du bâti 1 opposée à la face d'introduction des plateaux supérieur 15 et inférieur 10. Ce panneau 22 est muni de deux tablettes 23 et 24 s'étendant horizontalement à l'intérieur du bâti 1 et positionnées de telle sorte que les cadres 11 et 16 desdits plateaux inférieur 10 et supérieur 15 prennent appui sur les tablettes respectivement 23 et 24 lorsque lesdits plateaux 10 et 15 sont dans leur seconde position de coupe.

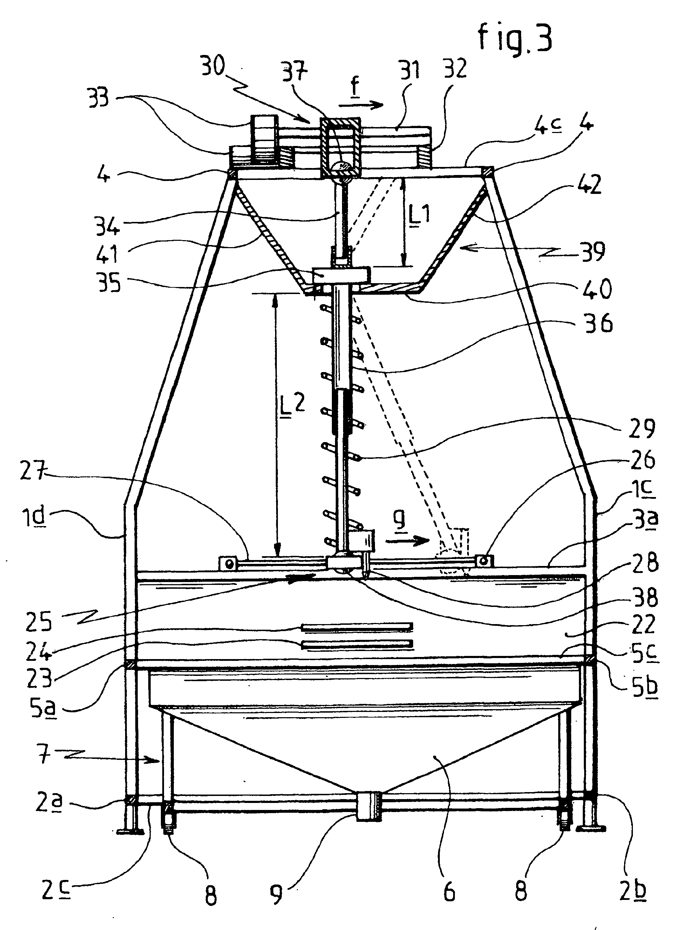

Par ailleurs, en référence aux figures 1 et 3 le dispositif comprend un premier chariot dit de coupe 25 apte à se déplacer le long de rails 26 et 27 s'étendant respectivement suivant un axe X et un axe Y, lesdits axes X et Y étant orthogonaux. Le chariot dit de coupe 25 porte une tête de coupe constituée par une buse 28 s'étendant globalement verticalement et orientée vers le bas qui est alimentée par un tuyau flexible 29 hélicoïdal comme on le verra plus loin. A l'extrémité supérieure du bâti 1, le dispositif comprend un second chariot dit de commande, positionné au-dessus du chariot de coupe 25, coulissant le long de rails 31 et 32, s'étendant respectivement suivant deux axes X et Y. Le chariot de commande 30 est déplacé le long des rails 31 et 32 par des moyens d'actionnement solidaires du bâti 1 et positionnés à proximité desdits rails 31,32. Les moyens d'actionnement du chariot de commande sont, par exemple, des moteurs électriques 33 pilotés par un ordinateur non représenté sur les figures. Le chariot de coupe 25 est solidarisé au chariot de commande 30 par des moyens de transmission, de telle sorte que le déplacement du chariot de commande 30 procuré par les moyens d'actionnement 33 provoque un déplacement, homothétique ou non, du chariot de coupe 25. Ces moyens de transmission sont constitués d'une part, d'un premier bras supérieur 34 dont les extrémités sont respectivement solidaires du chariot de commande 30 et d'une rotule 34 solidaire du bâti 1, ladite rotule étant positionnée entre le chariot de commande 30 et le chariot de coupe 25, et d'autre part, d'un second bras inférieur 36 dont les extrémités sont respectivement solidaires du chariot de coupe 25 et de ladite rotule 35, les bras supérieur et inférieur étant solidarisés respectivement au chariot de commande 30 et au chariot de coupe 25 par des articulations 37 et 38 tels que des joints universels par exemple.

En référence aux figures 1 et 3, la rotule 35 est solidaire d'une plaque de tôle 39 en forme d'auge, comprenant un plateau central 40 s'étendant horizontalement et deux ailes inclinées 41 et 42 de haut en bas et vers l'intérieur du bâti 1, lesdites ailes 41 et 42 étant solidaires des traverses latérales supérieurs 4a et 4b. Cette plaque de tôle 39, outre sa fonction de support de la rotule 35, permet de protéger les moyens d'actionnement du chariot de commande 30 des éventuelles projections d'eau. Afin de permettre le coulissement des chariots de commande 30 et de coupe 25 le long de leurs rails respectifs, les bras inférieur 36 et supérieur 34 consistent dans des tubes télescopiques. Par ailleurs, le tuyau d'alimentation 29 de la buse 28 consiste dans un tuyau flexible hélicoïdal s'étendant depuis la rotule 35 jusqu'à la buse 28 de telle sorte que le bras inférieur 36 s'étende coaxialement à l'intérieur des spires dudit tuyau flexible hélicoïdal.

Le rapport des longueurs des bras supérieur 34 et inférieur 36, à savoir respectivement L1 et L2, est avantageusement égal au rapport des longueurs des rails 31,32 et 26,27 suivant les axes X et Y respectivement des chariots de commande 30 et de coupe 25 de telle sorte que les surfaces rectangulaires dans lesquelles lesdits chariot de commande 30 et de coupe 25 se déplacent soient homothétiques. La rotule 35 est de préférence positionnée au centre de l'homothétie procurant ainsi un déplacement homothétique du chariot de coupe 25 lorsque le chariot de commande 30 est déplacé le long de ses rails. Ainsi, un déplacement de n cm du chariot de commande 30 le long du rail 37, c'est-à-dire dans la direction Y comme l'indique la flèche f de la figure 3, procure un déplacement de n.γ cm du chariot de coupe 25 le long de son rail 26, c'est-à-dire dans la même direction Y, comme indiqué par la flèche g de la figure 3, où γ est égal au rapport des longueurs des bras supérieur L1 et inférieur L2, c'est à dire au rapport de l'homothétie ayant pour centre la rotule 35, que l'on choisira de préférence inférieur à 1.

De manière accessoire, on peut avantageusement prévoir des panneaux couvrant les faces avant, arrière et latérales du bâti 1, lesdits panneaux s'étendant depuis l'extrémité supérieure du bâti 1 jusqu'aux traverses médianes 3a et 3b afin d'empêcher toute projection d'eau sur les dispositifs avoisinants et sur l'opérateur qui met en place les produits alimentaires sur les plateaux supérieur 15 et/ou inférieur 10. Par ailleurs, on notera que la tête de coupe constituée par la buse 28 qui est une source de bruit importante est ainsi contenue dans un "carter" formé par les panneaux couvrant les faces avant, arrière et latérales du bâti 1 et par la plaque de tôle 39 portant la rotule 35, ledit carter constituant ainsi une isolation phonique qui permet de réduire notablement les émissions sonores du dispositif de découpe à jet d'eau suivant l'invention.

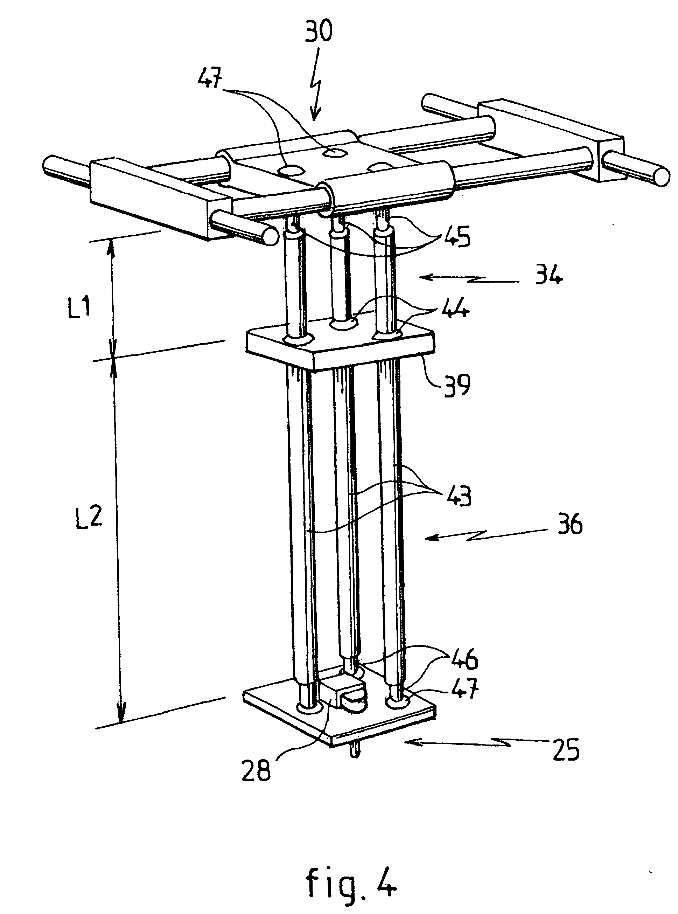

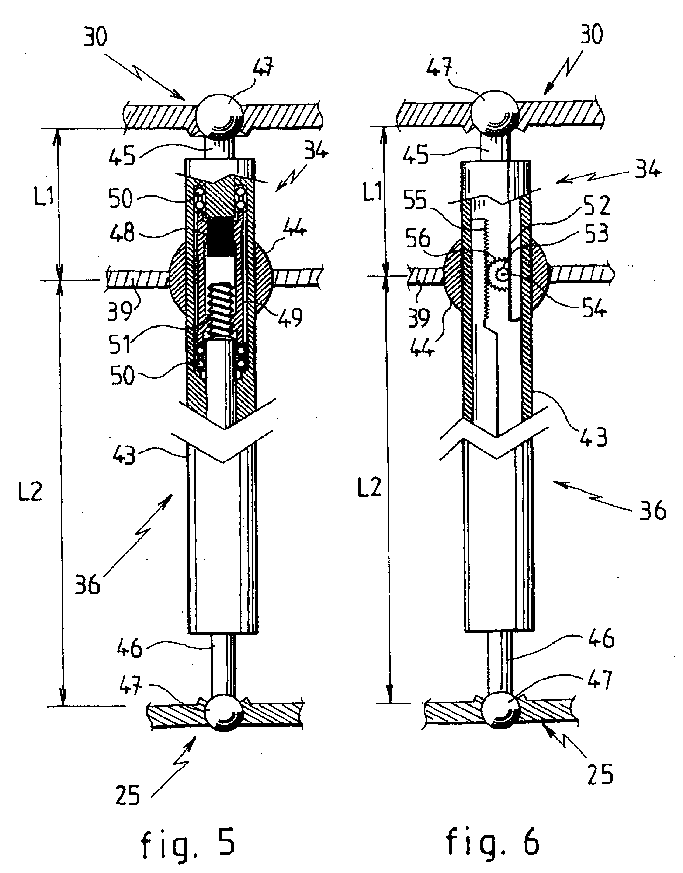

Afin de limiter les foyers de moisissure et de bactéries ainsi que le blocage du chariot de coupe 25 le long de ses rails 26 et 27 dus à la projection de fines particules de produits alimentaires sur lesdits rails 26 et 27 (figures 1 à 3), selon une variante particulièrement avantageuse de l'invention, en référence aux figures 4 et 5, les rails 26,27 s'étendant suivant deux axes X et Y de guidage du chariot de coupe 25 (figures 1 à 3) ont été supprimés et les moyens de transmission solidarisant le chariot de coupe 25 et le chariot de commande 30 ont été adaptés de telle sorte que le déplacement du chariot de commande 30 procuré par les moyens d'actionnement 33 provoque un déplacement, homothétique ou non, du chariot de coupe 25 dans un plan globalement parallèle au plateau de chargement différent 10,15 (figures 1. à 3). A cet effet, les moyens de transmission sont constitués de trois tubes 43 globalement verticaux respectivement articulés autour de trois rotules 44 solidaires de la plaque de tôle 39 s'étendant entre les montants 1a,1b,1c,1d du bâti 1 (figure 1), entre le chariot de commande 30 et le chariot de coupe 25, afin de protéger les moyens d'actionnement du chariot de commande 30 des éventuelles projections d'eau. Chaque tube 43 comprend à ses extrémités supérieures et inférieures une tige télescopique supérieure 45 et respectivement inférieure 46 dont les extrémités libres supérieures et inférieures sont solidarisées respectivement au chariot de commande 30 et au chariot de coupe 25 par des articulations 47 telles que des joints universels par exemple. On observera que les tiges télescopiques supérieure 45 et inférieure 46 ne sont pas montées libres en rotation autour de leur axe longitudinales. Les extrémités libres internes, c'est-à-dire les extrémités libres s'étendant dans les tubes 43, des tiges télescopiques supérieures 45 et inférieures 46, sont munies de moyens d'entraînement aptes à coopérer avec des moyens de liaison, qui seront détaillés plus loin, de telle sorte que le coulissement des tiges supérieures 45 entraîne le coulissement des tiges inférieures 46 et inversement.

En référence à la figure 5, chaque tige télescopique supérieure 45 consiste dans une tige filetée qui coopère avec un premier filetage intérieur 48 d'un manchon 49 cylindrique monté libre en rotation autour de son axe longitudinal et bloqué en translation par des butées 50 dans chaque tube 43. Ledit manchon 49 comprend, par ailleurs, un second filetage intérieur 51 opposé au premier filetage 48 qui coopère avec une seconde tige filetée formant la tige télescopique inférieure 46, lesdits premier et second filetages intérieurs 48 et 51 étant coaxiaux. Le rapport des pas de vis P1 et P2 des tiges télescopiques filetées supérieure 45 et respectivement inférieure 46 est avantageusement proportionnel au rapport des longueurs L1 et L2 des bras supérieurs 34 et inférieurs 36 de sorte que les surfaces rectangulaires dans lesquelles les chariots de commande 30 et de coupe se déplacent soient homothétiques, les rotules 44 des tubes 43 étant positionnées au centre de l'homothétie. On notera que le bras supérieur 34 consiste dans la portion des tubes 43 et les tiges télescopiques supérieure 45 s'étendant depuis les rotules 44 jusqu'au chariot de commande 30 et que, le bras inférieur 36 consiste dans la portion des tubes 43 et les tiges télescopiques inférieures 46 s'étendant depuis les rotules 44 jusqu'au chariot de coupe 25. Ainsi, lorsque le chariot de commande 30 se déplace le long de ses rails 31 suivant l'axe X (figure 1), la tige télescopique supérieure 45 coulisse dans le tube 43 provoquant l'allongement du bras supérieur 34. La tige télescopique supérieure 45, consistant dans une tige filetée bloquée en rotation autour de son axe longitudinal, le coulissement de ladite tige télescopique 45 dans le tube 43 entraîne en rotation, en coopérant avec le premier filetage intérieur du manchon, le manchon 49. La rotation du manchon 49 entraîne, au moyen du second filetage intérieur 51 opposé au premier filetage 48 du manchon 49, le coulissement de la tige inférieure 46 qui est, de la même manière que la tige télescopique supérieure 45, bloquée en rotation autour de son axe longitudinal. Les premiers et seconds filetages 48 et 51 du manchon 49 étant opposés, l'allongement du bras supérieur 34 provoque l'allongement du bras inférieur 36 et de la même manière, le rétrécissement du bras supérieur 34 provoque le rétrécissement du bras inférieur 36.

Selon une variante d'exécution, en référence à la figure 6, l'extrémité libre interne de chaque tige supérieure 45, c'est-à-dire l'extrémité libre s'étendant dans les tubes 43, comprend une première crémaillère 52 coopérant avec un premier pignon 53 monté libre en rotation autour d'un axe 54 s'étendant perpendiculairement à l'axe longitudinal du tube 43 à l'intérieur de ce dernier. Par ailleurs, l'extrémité libre interne de la tige inférieure 46 comprend une seconde crémaillère 55 coopérant avec un second pignon 56 solidaire du premier pignon 53 et qui est monté libre en rotation autour du même axe 54 dudit premier pignon 53. Le rapport des premier et second pignon 53 et 56 est avantageusement proportionnel au rapport des longueurs L1 et L2 des bras supérieurs et inférieurs s'étendant respectivement depuis les rotules 44 jusqu'au chariot de commande 30 et depuis les rotules 44 jusqu'au chariot de coupe 25 de sorte que les surfaces rectangulaires dans lesquelles les chariots de commande 30 et de coupe 25 se déplacent soient homothétiques, les rotules 44 étant positionnées au centre de l'homothétie.

## Revendications

1. Dispositif de découpe à jet d'eau notamment de produits alimentaires, constitué d'un bâti (1) globalement parallélépipédique comprenant des montants (1a,1b,1c,1d) et des traverses (2a,2b,2c,3a,3b,4a,4b,4c,4d,5a,5b,5c) et sur lequel est monté :
- au moins un plateau de chargement (10,15) s'étendant globalement horizontalement pour recevoir les produits alimentaires à découper,
- un chariot dit de coupe (25), se déplaçant dans un plan s'étendant globalement parallèlement au-dessus du plateau de chargement (10,15), le chariot de coupe (25) portant une tête de coupe constituée par une buse (28) qui est alimentée par un tuyau flexible (29) pour former un jet de fluide,
- un second chariot (30) dit de commande, positionné au-dessus du chariot de coupe (25), coulissant le long de rails (31,32) suivant deux axes X et Y par des moyens d'actionnement (33) solidaires du bâti (1) et positionnés à proximité des rails (31,32) du chariot de commande (30),
le chariot de coupe (25) étant solidarisé au chariot de commande (30) par des moyens de transmission (34,35,36,37,38) de telle sorte que le déplacement du chariot de commande (30) procuré par les moyens d'actionnement (33) provoque un déplacement du chariot de coupe (25) dans un plan globalement parallèle au plateau de chargement (10,15), **caractérisé en ce que** les moyens de transmission sont constitués d'un premier bras supérieur (34) dont les extrémités sont respectivement solidaires du chariot de commande (30) et d'une rotule (35) solidaire du bâti (1) par l'intermédiaire d'une plaque (39), laquelle rotule (35) est positionnée entre le chariot de commande (30) et le chariot de coupe (25) qui se déplace suivant deux axes X et Y le long d'autres rails (26,27), et d'un second bras inférieur (36) dont les extrémités sont respectivement solidaires du chariot de coupe (25) et de ladite rotule (35), les bras supérieur (34) et inférieur (36) consistant en des tubes télescopiques et étant solidarisés respectivement au chariot de commande (30) et au chariot de coupe (25) par des articulations (37,38) telles que des joints universels par exemple.

2. Dispositif de découpe à jet d'eau suivant la revendications 1 **caractérisé en ce que** le rapport des longueurs L1 et L2 des bras supérieur (34) et inférieur (36) est égal au rapport des longueurs des rails (31,32;26,27) suivant les axes X et Y respectivement des chariots de commande (30) et de coupe (25) de telle sorte que les surfaces rectangulaires dans lesquelles les chariots de commande (30) et de coupe (25) se déplacent soient homothétiques et **en ce que** la rotule (35) est positionnée au centre de l'homothétie procurant un déplacement homothétique du chariot de coupe (25) lorsque le chariot de commande (30) est déplacé.

3. Dispositif de découpe à jet d'eau, notamment de produits alimentaires, constitué d'un bâti (1) globalement parallélépipédique comprenant des montants (1a,1b,1c,1d) et des traverses (2a,2b,2c,3a,3b,4a,4b,4c,4d,5a,5b,5c) et sur lequel est monté :
- au moins un plateau de chargement (10,15) s'étendant globalement horizontalement pour recevoir les produits alimentaires à découper,
- un chariot dit de coupe (25), se déplaçant dans un plan s'étendant globalement parallèlement au-dessus du plateau de chargement (10,15), le chariot de coupe (25) portant une tête de coupe constituée par une buse (28) qui est alimentée par un tuyau flexible (29) pour former un jet de fluide,
- un second chariot (30) dit de commande, positionné au-dessus du chariot de coupe (25), coulissant le long de rails (31,32) suivant deux axes X et Y par des moyens d'actionnement (33) solidaires du bâti (1) et positionnés à proximité des rails (31,32) du chariot de commande (30), le chariot de coupe (25) étant solidarisé au chariot de commande (30) par des moyens de transmission (43,44,45,46,47) de telle sorte que le déplacement du chariot de commande (30) procuré par les moyens d'actionnement (33) provoque un déplacement du chariot de coupe (25) dans un plan globalement parallèle au plateau de chargement (10,15), **caractérisé en ce que** les moyens de transmission sont constitués de trois tubes (43) globalement verticaux respectivement articulés autour de trois rotules (44) solidaires du bâti (1) par l'intermédiaire d'une plaque (39) et positionnés entre le chariot de commande (30) et le chariot de coupe (25), chaque tube (43) comprenant à ses extrémités supérieures et inférieures une tige télescopique supérieure (45) et inférieure (46) dont les extrémités libres supérieures et inférieures sont solidarisées respectivement au chariot de commande (30) et au chariot de coupe (25) par des articulations (47) telles que des joints universels par exemple, et dont les extrémités libres internes, c'est-à-dire les extrémités libres s'étendant dans les tubes, sont munies de moyens d'entraînement aptes à coopérer avec des moyens de liaison de telle sorte que le coulissement des tiges supérieures (45) entraîne le coulissement des tiges inférieures (46) et inversement.

4. Dispositif de découpe à jet d'eau suivant la revendication 3 **caractérisé en ce que** chaque tige télescopique supérieure (45) consiste dans une tige filetée qui coopère avec un premier filetage intérieur (48) d'un manchon (49), monté libre en rotation autour de son axe longitudinal, bloqué en translation par des butées (50) dans le tube (43) et comprenant un second filetage intérieur (51) opposé au premier filetage (48) qui coopère avec une seconde tige filetée formant la tige télescopique inférieure (46), lesdits premier et second filetages intérieurs (48,51) étant coaxiaux.

5. Dispositif de découpe à jet d'eau suivant la revendication 4 **caractérisé en ce que** le rapport des pas de vis P1 et P2 des tiges télescopiques filetées supérieure (45) et respectivement inférieure (46) est proportionnel au rapport des longueurs L1 et L2 des bras supérieur (34) et inférieur (36) s'étendant respectivement depuis les rotules (44) jusqu'au chariot de commande (30) et depuis les rotules (44) jusqu'au chariot de coupe (25) de sorte que les surfaces rectangulaires dans lesquelles les chariots de commande (30) et de coupe (25) se déplacent soient homothétiques, les rotules (44) étant positionnées au centre de l'homothétie.

6. Dispositif de découpe à jet d'eau suivant la revendication 3 **caractérisé en ce que** l'extrémité libre interne de la tige supérieure (45) comprend une première crémaillère (52) coopérant avec un premier pignon (53) monté libre en rotation autour d'un axe (54) s'étendant perpendiculairement à l'axe longitudinal du tube (43) à l'intérieur de ce dernier et l'extrémité libre interne de la tige inférieure (46) comprend une seconde crémaillère (55) coopérant avec un second pignon (56) solidaire et coaxial au premier pignon (53).

7. Dispositif de découpe à jet d'eau suivant la revendication 6 **caractérisé en ce que** le rapport des premier et second pignons (53,56) est proportionnel au rapport des longueurs L1 et L2 des bras supérieur (34) et inférieur (36) s'étendant respectivement depuis les rotules (44) jusqu'au chariot de commande (30) et depuis les rotules (44) jusqu'au chariot de coupe (25) de sorte que les surfaces rectangulaires dans lesquelles les chariots de commande (30) et de coupe (25) se déplacent soient homothétiques, les rotules (44) étant positionnées au centre de l'homothétie.

8. Dispositif de découpe à jet d'eau suivant l'une quelconque des revendications 1 à 7 **caractérisé en ce que** la plaque de tôle (39) s'étend entre les montants (1a,1b,1c,1d) du bâti (1) afin de protéger les moyens d'actionnement du chariot de commande (30) des éventuelles projections d'eau.

9. Dispositif de découpe à jet d'eau suivant l'une quelconque des revendications 1 à 8 **caractérisé en ce que** le tuyau d'alimentation (29) en fluide de la buse (28) consiste dans un tuyau flexible hélicoïdal s'étendant depuis la rotule (35) jusqu'à la buse (28) de telle sorte que le bras inférieur (36) s'étende coaxialement à l'intérieur des spires.

10. Dispositif de découpe à jet d'eau suivant l'une quelconque des revendications précédentes **caractérisé en ce que** un plateau de chargement supérieur et un plateau de chargement inférieur (15,10), qui reçoivent les produits alimentaires à découper sont respectivement montés mobiles en rotation autour d'un premier axe vertical (18) et d'un deuxième axe vertical (13) de manière à ce que les plateaux (10,15) puissent être amenés depuis une première position de chargement où lesdits plateaux (10,15) s'étendent à côté du bâti (1) jusqu'à une seconde position de coupe où lesdits plateau (15) s'étendent sous le chariot de coupe (25) entre les montants (1a,1b,1c,1d) du bâti (1).

11. Dispositif de découpe à jet d'eau suivant la revendication 10 **caractérisé en ce que** les plateaux sont introduits par une même face verticale du bâti (1) et **en ce que** ce dernier comprend une plaque (20) s'étendant horizontalement depuis la face d'introduction des plateaux de chargement supérieur et inférieur (15,10) vers l'extérieur entre lesdits plateaux de chargement supérieur et inférieur (15,10) pour que, lors de la découpe des produits alimentaires positionnés sur le plateau supérieur (15), les produits alimentaires positionnés sur le plateau inférieur (10) en position de chargement, soient protégés des projections d'eau.

## Patentansprüche

1. Wasserstrahlschneidvorrichtung, vor allem für Lebensmittel, bestehend aus einem insgesamt parallelepipedförmigen Gestell (1), das Ständer (1a, 1b, 1c, 1d) und Querträger (2a, 2b, 2c, 3a, 3b, 4a, 4b, 4c, 4d, 5a, 5b, 5c) aufweist, und auf dem montiert sind:
- mindestens eine Beschickungsplatte (10, 15), die sich insgesamt waagerecht erstreckt, um die zu schneidenden Lebensmittel aufzunehmen,
- ein so genannter Schneidschlitten (25), der sich in einer Ebene bewegt, die sich insgesamt parallel oberhalb der Beschickungsplatte (10, 15) erstreckt, wobei der Schneidschlitten (25) einen Schneidkopf trägt, der von einer Düse (28) gebildet wird, die von einem Schlauch (29) versorgt wird, um einen Flüssigkeitsstrahl zu bilden,
- ein so genannter zweiter Steuerschlitten (30), der über dem Scheidschlitten (25) positioniert ist und auf Schienen (31, 32) entlang zweier Achsen X und Y aufgrund von Antriebsmitteln (33) gleitet, die mit dem Gestell (1) verbunden und in der Nähe der Schienen (31, 32) des Steuerschlittens (30) positioniert sind, wobei der Schneidschlitten (25) mit dem Steuerschlitten (30) anhand von Übertragungsmitteln (34, 35, 36, 37, 38) derart verbunden ist, dass die durch die Antriebsmittel (33) bewirkte Verschiebung des Steuerschlittens (30) eine Verschiebung des Schneidschlittens (25) in einer zur Beschickungsplatte (10, 15) insgesamt parallelen Ebene hervorruft, **dadurch gekennzeichnet, dass** die Übertragungsmittel von einem ersten oberen Arm (34) gebildet werden, dessen Enden jeweils mit dem Steuerschlitten (30) und einem mit dem Gestell (1) über eine Platte (39) verbundenen Kugelgelenk (35) verbunden sind, wobei dieses Kugelgelenk (35) zwischen dem Steuerschlitten (30) und dem Schneidschlitten (25) positioniert ist, der sich gemäß zweier Achsen X und Y entlang anderer Schienen (26, 27) verschiebt, und von einem zweiten unteren Arm (36), dessen Enden jeweils mit dem Schneidschlitten (25) und dem besagten Kugelgelenk (35) verbunden sind, wobei der obere (34) und der untere (36) Arm aus Teleskoparmen bestehen und jeweils mit dem Steuerschlitten (30) und dem Schneidschlitten (25) durch Gelenke (37, 38), wie zum Beispiel Universalgelenken, verbunden sind.

2. Wasserstrahlschneidvorrichtung nach Anspruch 1, **dadurch gekennzeichnet, dass** das Verhältnis der Längen L1 und L2 des oberen (34) und des unteren (36) Arms dem Längenverhältnis der Schienen (31, 32; 25, 27) gemäß den Achsen X und Y beziehungsweise des Steuerschlittens (30) und des Schneidschlittens (25) derart entspricht, dass die rechteckigen Flächen, in denen sich der Steuerschlitten (30) und der Schneidschlitten (25) verschieben, homothetisch sind, und **dadurch**, dass das Kugelgelenk (35) in der Mitte der Homothetie positioniert ist und eine homothetische Verschiebung des Schneidschlittens (25) bewirkt, wenn der Steuerschlitten (30) verschoben wird.

3. Wasserstrahlschneidvorrichtung, vor allem für Lebensmittel, bestehend aus einem insgesamt parallelepipedförmigen Gestell (1), das Ständer (1a, 1b, 1c, 1d) und Querträger (2a, 2b, 2c, 3a, 3b, 4a, 4b, 4c, 4d, 5a, 5b, 5c) aufweist, und auf dem montiert sind:
- mindestens eine Beschickungsplatte (10, 15), die sich insgesamt waagerecht erstreckt, um die zu schneidenden Lebensmittel aufzunehmen,
- ein so genannter Schneidschlitten (25), der sich in einer Ebene bewegt, die sich insgesamt parallel oberhalb der Beschickungsplatte (10, 15) erstreckt, wobei der Schneidschlitten (25) einen Schneidkopf trägt, der von einer Düse (28) gebildet wird, die von einem Schlauch (29) versorgt wird, um einen Flüssigkeitsstrahl zu bilden,
- ein so genannter zweiter Steuerschlitten (30), der über dem Scheidschlitten (25) positioniert ist und auf Schienen (31, 32) entlang zweier Achsen X und Y aufgrund von Antriebsmitteln (33) gleitet, die mit dem Gestell (1) verbunden und in der Nähe der Schienen (31, 32) des Steuerschlittens (30) positioniert sind, wobei der Schneidschlitten (25) mit dem Steuerschlitten (30) anhand von Übertragungsmitteln (43, 44, 45, 46, 47) derart verbunden ist, dass die durch die Antriebsmittel (33) bewirkte Verschiebung des Steuerschlittens (30) eine Verschiebung des Schneidschlittens (25) in einer zur Beschickungsplatte (10, 15) insgesamt parallelen Ebene hervorruft, **dadurch gekennzeichnet, dass** die Übertragungsmittel aus drei insgesamt senkrechten Rohren (43) bestehen, die jeweils um drei Kugelgelenke (44) angeordnet sind, die mit dem Gestell (1) über eine Platte (39) verbunden und zwischen dem Steuerschlitten (30) und dem Schneidschlitten (25) positioniert sind, wobei jedes Rohr (43) an seinen oberen und unteren Enden eine obere (45) und eine untere (46) Teleskopstange aufweist, dessen freie obere und untere Enden jeweils mit dem Steuerschlitten (30) und dem Schneidschlitten (25) über Gelenke (47), wie zum Beispiel Universalgelenke, verbunden sind, und dessen freie innere Enden, das heißt die freien Enden, die sich in die Rohre erstrecken, mit Antriebsmitteln versehen sind, die mit den Verbindungsmitteln derart zusammenwirken können, dass das Gleiten der oberen Stangen (45) bewirkt, dass die unteren Stangen (46) gleiten und umgekehrt.

4. Wasserstrahlschneidvorrichtung nach Anspruch 3, **dadurch gekennzeichnet, dass** jede obere Teleskopstange (45) aus einer Gewindestange besteht, die mit einem ersten Innengewinde (48) einer Muffe (49) zusammenwirkt, die um ihre Längsachse frei drehbar montiert und in ihrer Verschiebebewegung durch Anschläge (50) in der Stange (43) blockiert ist und ein zweites, dem ersten Gewinde (48) gegenüberliegendes Innengewinde (51) aufweist, das mit einer zweiten Gewindestange zusammenwirkt, welche die untere Gewindestange (46) bildet, wobei diese ersten und zweiten Innengewinde (48, 51) koaxial sind.

5. Wasserstrahlschneidvorrichtung nach Anspruch 4, **dadurch gekennzeichnet, dass** das Verhältnis der Gewindesteigungen P1 und P2 der oberen (45) und jeweiligen unteren (46) Gewinde-Teleskopstangen proportional zum Verhältnis der Längen L1 und L2 der oberen (34) und unteren (36) Arme ist, die sich jeweils ab den Kugelgelenken (44) bis zum Steuerschlitten (30) und ab den Kugelgelenken (44) bis zum Schneidschlitten (25) derart erstrecken, dass die rechteckigen Flächen, in denen sich der Steuerschlitten (30) und der Schneidschlitten (25) verschieben, homothetisch sind, wobei die Kugelgelenke (44) in der Mitte der Homothetie positioniert sind.

6. Wasserstrahlschneidvorrichtung nach Anspruch 3, **dadurch gekennzeichnet, dass** das freie innere Ende der oberen Stange (45) eine erste Zahnstange (52) aufweist, die mit einem ersten Ritzel (53) zusammenwirkt, das frei drehbar um eine Achse (54) montiert ist, die sich senkrecht zur Längsachse des Rohrs (43) im Innern derselben erstreckt, und das freie innere Ende der unteren Stange (46) eine zweite Zahnstange (55) aufweist, die mit einem zweiten Ritzel (56) zusammenwirkt, das mit dem ersten Ritzel (53) verbunden ist und sich koaxial zu diesem befindet.

7. Wasserstrahlschneidvorrichtung nach Anspruch 6, **dadurch gekennzeichnet, dass** das Verhältnis zwischen dem ersten und dem zweiten Ritzel (53, 56) proportional zum Verhältnis der Längen L1 und L2 der oberen (34) und unteren (36) Arme ist, die sich jeweils ab den Kugelgelenken (44) bis zum Steuerschlitten (30) und ab den Kugelgelenken (44) bis zum Schneidschlitten (25) derart erstrecken, dass die rechteckigen Flächen, in denen sich der Steuerschlitten (30) und der Schneidschlitten (25) verschieben, homothetisch sind, wobei die Kugelgelenke (44) in der Mitte der Homothetie positioniert sind.

8. Wasserstrahlschneidvorrichtung nach einem der Ansprüche 1 bis 7, **dadurch gekennzeichnet, dass** sich die Blechplatte (39) zwischen den Ständern (1a, 1b, 1c, 1d) des Gestells (1) erstreckt, um die Antriebsmittel des Steuerschlittens (30) vor eventuellen Wasserspritzern zu schützen.

9. Wasserstrahlschneidvorrichtung nach einem der Ansprüche 1 bis 8, **dadurch gekennzeichnet, dass** der Schlauch (29), der die Düse (28) mit Flüssigkeit versorgt, aus einem spiralförmigen Schlauch besteht, der sich ab dem Kugelgelenk (35) bis zur Düse (28) derart erstreckt, dass der untere Arm (36) koaxial innerhalb der Windungen verläuft.

10. Wasserstrahlschneidvorrichtung nach einem der vorhergehenden Ansprüche, **dadurch gekennzeichnet, dass** eine obere und eine untere Beschickungsplatte (15, 10), welche die zu schneidenden Lebensmittel aufnehmen, jeweils derart drehbewegbar um eine erste senkrechte Achse (18) und eine zweite senkrechte Achse (13) montiert sind, dass die obere und untere Beschickungsplatten (10, 15) von einer ersten Beschickungsposition, bei der sich die besagten Platten (10, 15) seitlich des Gestells (1) erstrecken, in eine zweite Schneidposition geführt werden können, bei der sich die besagten Platten (15) unter dem Schneidschlitten (25) zwischen den Ständern (1a, 1b, 1c, 1d) des Gestells (1) erstrecken.

11. Wasserstrahlschneidvorrichtung nach Anspruch 10, **dadurch gekennzeichnet, dass** die obere und untere Beschickungsplatte (15, 10) durch dieselbe senkrechte Seite des Gestells (1) eingeführt werden und **dadurch**, dass dieses eine Platte (20) aufweist, die sich waagerecht von der Einführungsseite der oberen und unteren Beschickungsplatten (15, 10) nach außen zwischen den besagten oberen und unteren Beschickungsplatten (15, 10) erstreckt, um beim Schneiden von Lebensmitteln, die sich auf der oberen Platte (15) befinden, die sich auf der unteren Platte (10) in Beschickungsposition befindlichen Lebensmittel vor Wasserstrahlen zu schützen.

## Claims

1. A water-jet cutting device, in particular for food products, composed of a structure (1) in general of parallelepiped shape, that includes uprights (1a, 1b, 1c, 1d) and cross members (2a, 2b, 2c, 3a, 3b, 4a, 4b, 4c, 4d, 5a, 5b, and 5c), and on which is mounted:
- at least one loading table (10, 15) lying generally horizontal, to receive the food products to be cut,
- a trolley known as the cutting trolley (25), moving in a plane lying in general parallel to and above the loading table (10, 15), with the cutting trolley (25) carrying a cutting head composed of a nozzle (28) which is fed by a hosepipe (29) to form a fluid jet,
a second trolley (30) known as the control trolley, positioned above the cutting trolley (25), and slid along rails (31, 32) on two axes, X and Y, by operating resources (33) joined to the structure (1) and positioned close to the rails (31, 32) of the control trolley (30), with the cutting trolley (25) being attached to the control trolley (30) by transmission resources (34, 35, 36, 37 , 38) so that the movement of the control trolley (30) brought about by the operating resources (33) gives rise to a movement of the cutting trolley (25) in a plane generally parallel to the loading table (10, 15), **characterised in that** the transmission resources are composed of a first upper arm (34) whose extremities are respectively joined to the control trolley (30) and to a swivel (35) attached to the structure (1) by means of a plate (39), this swivel (35) being positioned between the control trolley (30) and the cutting trolley (25) which moves on two axes, X and Y, along other rails (26, 27), and of a second lower arm (36) whose extremities are respectively joined to the cutting trolley (25) and the said swivel (35), the upper arm (34) and lower arm (36) consisting of telescopic tubes and being attached respectively to the control trolley (30) and to the cutting trolley (25) by joints (37, 38), such as universal joints for example.

2. A water-jet cutting device according to claim 1, **characterised in that** the ratio of the lengths, L1 and L2, of the upper arm (34) and lower arm (36) is equal to the ratio of the lengths of the rails (31, 32 and 26, 27) on the X and Y axes respectively of the control trolley (30) and cutting trolley (25) so that the rectangular areas in which the control (30) and cutting (25) trolleys move are homothetic and **in that** the swivel (35) is positioned at the homotheticity centre, thus achieving a homothetic movement of the cutting trolley (25) when the control trolley (30) is moved.

3. A water-jet cutting device, in particular of food products, composed of a structure (1) in general of parallelepiped shape, that includes uprights (1a, 1b, 1c, 1d) and cross members (2a, 2b, 2c, 3a, 3b, 4a, 4b, 4c, 4d, 5a, 5b, 5c) and on which are mounted:
- at least one loading table (10, 15) lying horizontally in general, to receive the food products to be cut,
- a trolley known as the cutting trolley (25), moving in a plane lying in general parallel to and above the loading table (10, 15), with the cutting trolley (25) carrying a cutting head composed of a nozzle (28) which is fed by a hosepipe (29) to form a fluid jet,
- a second trolley (30) known as the control trolley, positioned above the cutting trolley (25), slid along rails (31, 32) on two axes, X and Y, by operating resources (33) joined to the structure (1) and positioned close to the rails (31, 32) of the control trolley (30), with the cutting trolley (25) being attached to the control trolley (30) by transmission resources (43, 44, 45, 46, 47) so that the movement of the control trolley (30) brought about by the operating resources (33) gives rise to a movement of the cutting trolley (25) in a plan that is in general parallel to the loading table (10, 15), **characterised in that** the transmission resources are composed of three tubes (43), generally vertical and respectively articulated around three swivels (44) joined to the structure (1) by means of a plate (39) and positioned between the control trolley (30) and the cutting trolley (25), each tube (43) including, at its upper and lower ends, an upper telescopic rod (45) and a lower telescopic rod (46) whose free upper and lower ends are attached to the control trolley (30) and to the cutting trolley (25) respectively by joints (47), such as universal joints, for example, and whose free inner ends, that is the free ends lying in the tubes, are equipped with drive resources capable of fitting onto the connecting resources so that the movement of the upper rods (45) drives the movement of the lower rods (46) and vice versa.

4. A water-jet cutting device according to claim 3, **characterised in that** each upper telescopic rod (45) consists of a threaded rod which fits onto a first inside thread (48) of a sleeve (49), mounted to rotate freely around its longitudinal axis, prevented from moving sideways by end-stops (50) in the tube (43) and that includes a second inside thread (51), opposite to the first thread (48), which fits onto a second threaded rod forming the lower telescopic rod (46), the said first and second inside threads (48, 51) being coaxial.

5. A water-jet cutting device according to claim 4, **characterised in that** the ratio of the screw pitches, P1 and P2, of the upper and lower telescopic rods (45 and 46 respectively) is proportional to the ratio of the lengths, L1 and L2, of the upper (34) and lower (36) arms extending from the swivels (44) to the control trolley (30) and from the swivels (44) to the cutting trolley (25) respectively, so that the rectangular areas in which the control (30) and cutting (25) trolleys move are homothetic, the swivels (44) being positioned at the homotheticity centre.

6. A water-jet cutting device according to claim 3, **characterised in that** the inside free end of the upper rod (45) includes a first rack (52) that meshes with a first gearwheel (53) mounted to rotate freely around an axis (54) lying perpendicularly to the longitudinal axis of the tube (43) within the latter, and the inside free end of the lower rod (46) includes a second rack (55) that meshes with a second gearwheel (56) attached to and coaxial with the first gearwheel (53).

7. A water-jet cutting device according to claim 6, **characterised in that** the ratio of the first and seconds gearwheels (53, 56) is proportional to the ratio of the lengths, L1 and L2, of the upper (34) and lower (36) arms, extending from the swivels (44) to the control trolley (30) and from the swivels (44) to the cutting trolley (25) respectively, so that the rectangular areas in which the control (30) and cutting (25) trolleys move are homothetic, with the swivels (44) being positioned at the homotheticity centre.

8. A water-jet cutting device according to any of claims 1 to 7, **characterised in that** a steel plate (39) lies between the uprights (1a, 1b, 1c, 1d) of the structure (1) in order to protect the operating resources of the control trolley (30) from any water spray.

9. A water-jet cutting device according to any of claims 1 to 8, **characterised in that** the fluid feed pipe (29) of the nozzle (28) consists of a helical hosepipe extending from the swivel (35) to the nozzle (28) so that the lower arm (36) lies coaxially within its turns.

10. A water-jet cutting device according to any of the preceding claims, **characterised in that** an upper loading table and a lower loading table (15, 10) which receive the food products to be cut are mounted so that they are able to rotate respectively around a first vertical axis (18) and a second vertical axis (13), in order that the tables (10, 15) can be brought from a first loading position where the said tables (10, 15) lie alongside the structure (1) to a second cutting position where the said tables (15) lie under the cutting trolley (25) between the uprights (1a, 1b, 1c, 1d) of the structure (1).

11. A water-jet cutting device according to claim (10) **characterised in that** the upper and lower loading tables (15, 10) are inserted via a common vertical face of the structure (1) and **in that** the latter includes a plate (20) lying horizontally from the face for insertion of the said upper and lower loading tables (15, 10) toward the exterior between the said upper and lower loading tables (15, 10), so that during cutting of the food products positioned on the upper table (15), the food products positioned on the lower table (10) in the loading position are protected from the water spray.
